# EUROPEAN PATENT APPLICATION

(11) **EP 2 458 749 A2**
(43) Date of publication of application: **30.05.2012**
(21) Application number: 10802420.9
(22) Date of filing: 14.07.2010
(51) Int. Cl.: H04B 10/13, H04B 10/04, H04B 10/06

(54) **OPTICAL TRANSMITTING APPARATUS AND METHOD, AND OPTICAL RECEIVING DEVICE AND METHOD**

(30) Priority: 24.07.2009 KR 20090067998; 08.07.2010 KR 20100065956
(71) Applicant: Electronics and Telecommunications Research Institute, Daejeon-city 305-350 (KR)
(72) Inventor: CHUNG, Hwan Seok, Daejeon 305-509 (KR); CHANG, Sun Hyok, Daejeon 305-509 (KR); KIM, Kwangjoon, Daejeon 305-707 (KR)
(74) Representative: Esslinger, Alexander
(86) International application number: PCT/KR2010/004582
(87) International publication number: WO 2011/010827

(57) **Abstract**

An optical transmitting apparatus optically modulates a transmitting signal to transmit the signal to an optical receiving apparatus using a phase of two optical carriers having each wavelength, and an optical receiving apparatus demodulates an optical signal having a modulated phase with intensity modulation to detect a transmitting signal.

## Description

### [Technical Field]

The present invention relates to an apparatus and method for transmitting light, and an apparatus and method for receiving light.

### [Background Art]

Internet traffic has gradually increased due to the advent of an Ethernet-based service such as Internet TV and user created contents (UCC), such that it is essentially requested to enlarge an area of a network.

At a data traffic focusing point such as a high performance computer, server, data center, enterprise network, and Internet exchange center, in order to satisfy a bandwidth request, a signal of 40G or more per wavelength is generated. In order to transmit such a high speed signal, an optical transmitter uses a phase shift keying (PSK) method that modulates a phase of an optical signal or a quadrature phase shift keying (QPSK) method that can transmit 2 bits or more per symbol.

In general, because a PSK or QPSK signal is transmitted using a single carrier, polarization mode dispersion and chromatic dispersion generating in an optical line should be compensated on a channel basis in a reception terminal. For example, when the QPSK method is used, if the bit rate is B, the symbol rate is the bit rate that is divided into the number of bits that can be transmitted with each symbol and thus the symbol rate becomes B/2. Therefore, a bandwidth of optoelectronic device to be 1/2 of a bit rate is required.

In order to solve such a problem, a dual polarization-quadrature phase shift keying (DP-QPSK) of simultaneously using the QPSK and polarization characteristics of an optical signal is suggested. Because the DP-QPSK can lower the symbol rate to B/4, the bandwidth of optoelectronic devices can be reduced and pulse dispersion of an optical signal generating in an optical line can be suppressed. However, in order to separate two polarizations and restore a signal, the phase of the optical signal should be detected and thus an analog to digital converter (ADC) and a digital signal processor (DSP) operating at a high speed in a reception terminal are always necessary.

A DP-DQPSK method of lowering the symbol transmission rate to B/4 using polarization characteristics of an optical signal while not using the ADC and the DSP is suggested. The DP-DQPSK method converts a phase modulated optical signal to intensity modulation optical signal and receives the optical signal using a delay interferometer in a reception terminal, and thus does not require the ADC and the DSP. However, the reception terminal requires a complicated polarization controller for separating polarization.

### [Disclosure]

### [Technical Problem]

The present invention has been made in an effort to provide an apparatus and method for transmitting light and an apparatus and method for receiving light having advantages of transmitting a signal at a high transmission speed and a low symbol rate speed without using an ADC, a DSP, and a polarization controller.

### [Technical Solution]

An exemplary embodiment of the present invention provides an optical transmitting apparatus including a dual carrier generator, a serializing device, a first modulator, a second modulator, and a signal coupler. The dual carrier generator generates first and second optical carriers. The serializing device multiplexes a plurality of input signals into two pairs of I and Q signals. The first modulator modulates a pair of I and Q signals using a phase of the first optical carrier. The second modulator modulates another pair of I and Q signals using a phase of the second optical carrier. The signal coupler couples and transmits signals that are modulated by the first and second modulators.

Another embodiment of the present invention provides an optical receiving apparatus including a first interferometer, a second interferometer, first and second balanced photo-detectors, and a parallelizing device. The first interferometer restores an input optical signal into a pair of I and Q signal components by demodulating with intensity modulation. The second interferometer restores an input optical signal into another pair of I and Q signal components by demodulating with intensity modulation. The first and second balanced photo-detectors output a pair of I and Q signals by converting a pair of I and Q signal components to an electric signal. The third and fourth balanced photo-detectors output another pair of I and Q signals by converting another pair of I and Q signal components to an electric signal. The parallelizing device separates the two pairs of I and Q signals into a plurality of signals by demultiplexing.

Yet another embodiment of the present invention provides a method of transmitting an optical signal in an optical transmitting apparatus. The method includes generating first and second optical carriers, multiplexing a plurality of input signals into two pairs of I and Q signals, optically modulating two pairs of I and Q signals using a phase of the first and second optical carriers, and transmitting the two modulated optical signals.

Yet another embodiment of the present invention provides a method of receiving an optical signal in an optical receiving apparatus. The method includes converting two optical signals to two pairs of I and Q signals by modulating the input two optical signals with intensity modulation using a phase difference of two optical signals having different wavelengths, and separating the two pairs of I and Q signals into a plurality of signals.

### [Advantageous Effects]

According to an exemplary embodiment of the present invention, because an analog to digital converter (ADC), a high speed digital signal processor (DSP), and a complicated polarization controller are not used, the structure of an optical transceiver becomes simple.

Further, an optical signal can be transmitted with a high transmission speed and a low symbol rate speed through an optical transceiver of a simple structure. Therefore, pulse dispersion generated in an optical line can be prevented while being capable of performing high speed transmission that is required in an optical communication network.

### [Description of the Drawings]

FIG. 1 is a diagram illustrating an optical transceiver according to an exemplary embodiment of the present invention.
FIG. 2 is a diagram illustrating an example of a modulator that is shown in FIG. 1.
FIG. 3 is a diagram illustrating an example of an interferometer that is shown in FIG. 1.
FIG. 4 is a flowchart illustrating a method of transmitting light using an optical transmitting apparatus according to an exemplary embodiment of the present invention.
FIG. 5 is a diagram illustrating the output of a dual carrier generator.
FIG. 6 is a diagram illustrating an optical carrier that is separated by a carrier separator.
FIG. 7 is a diagram illustrating the output of two modulators.
FIG. 8 is a diagram illustrating the output of a signal coupler.
FIG. 9 is a flowchart illustrating a method of receiving light according to an exemplary embodiment of the present invention.
FIG. 10 is a diagram illustrating the output of a signal separator.
FIG. 11 is a diagram illustrating an example of a dual carrier generator that is shown in FIG. 1.
FIG. 12 is a diagram illustrating another example of a dual carrier generator that is shown in FIG. 1.
FIG. 13 is a diagram illustrating an example of a signal coupler that is shown in FIG. 1.
FIG. 14 is a diagram illustrating another example of a signal coupler that is shown in FIG. 1.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, in the entire specification and claims, unless explicitly described to the contrary, the word "comprise" and variations such as "comprises" or "comprising" will be understood to imply the inclusion of stated elements but not the exclusion of any other elements.

Now, an apparatus and method for transmitting light and an apparatus and method for receiving light according to an exemplary embodiment of the present invention will be described in detail with reference to the drawings.

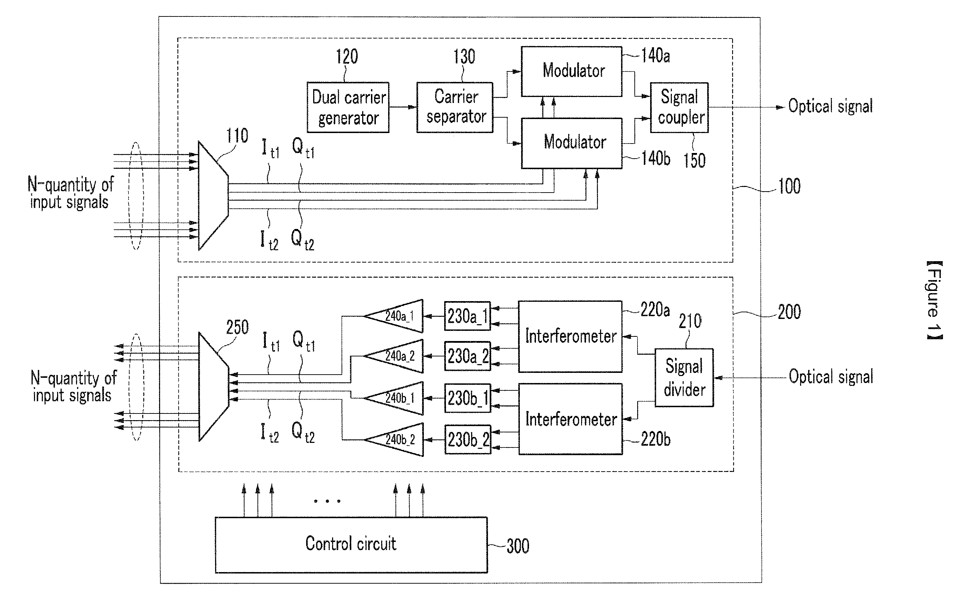

FIG. 1 is a diagram illustrating an optical transceiver according to an exemplary embodiment of the present invention.

Referring to FIG. 1, the optical transceiver includes an optical transmitting apparatus 100, an optical receiving apparatus 200, and a control circuit 300.

The optical transmitting apparatus 100 includes a serializing device 110, a dual carrier generator 120, a carrier separator 130, modulators 140a and 140b, and a signal coupler 150.

The serializing device 110 multiplexes the input n-quantity of electric signals into four electric signals Iₜ₁, Qₜ₁, Iₜ₂, and Qₜ₂ to output the electric signals to the modulators 140a and 140b. Here, the four electric signals Iₜ₁, Qₜ₁, Iₜ₂, and Qₜ₂ are two pairs of in-phase (I) and quadrature-phase (Q) signals Iₜ₁/Qₜ₁ and Iₜ₂/Qₜ₂, a pair of I and Q signals Iₜ₁/Qₜ₁ are input to one modulator 140a, and the remaining pair of I and Q signals Iₜ₂/Qₜ₂ are input to another modulator 140b.

The dual carrier generator 120 generates two optical carriers.

The carrier separator 130 separates two optical carriers, outputs one optical carrier to the modulator 140a, and outputs the remaining optical carrier to the modulator 140b.

The modulators 140a and 140b optically modulate the input I and Q signals Iₜ₁/Qₜ₁ and Iₜ₂/Qₜ₂ with a differential quadrature phase shift keying (DQPSK) method using an optical carrier. Here, the DQPSK is a modulation method that changes a phase of the optical carrier by transmitting a signal at a phase difference of 90° and that shifts four phases 0, 90, 180, and 270 degree.

The modulators 140a and 140b according to an exemplary embodiment of the present invention use a Mach-Zehnder modulator.

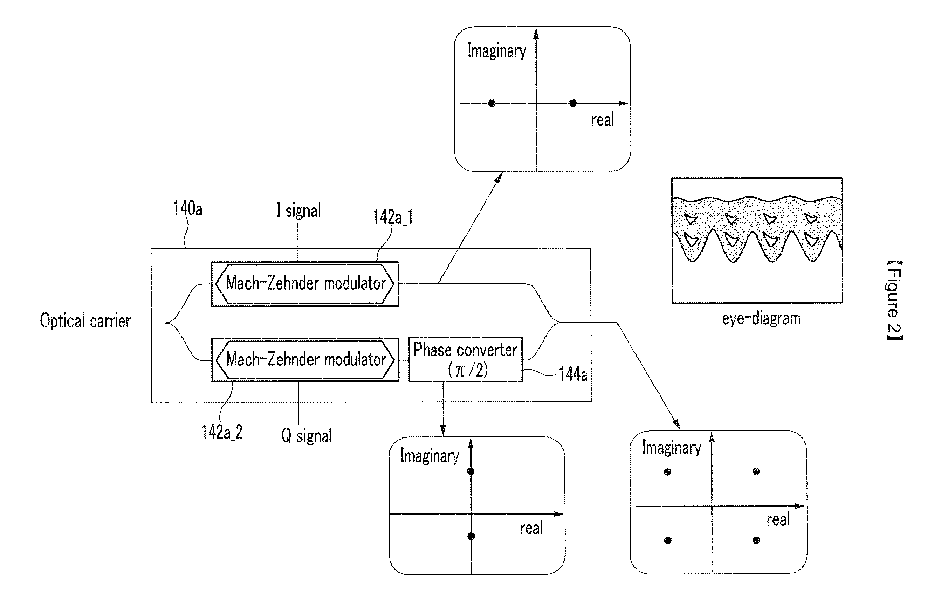

FIG. 2 is a diagram illustrating an example of a modulator that is shown in FIG. 1. FIG. 2 illustrates only one modulator 140a of two modulators 140a and 140b, and the modulator 140b can be formed equally to the modulator 140a.

Referring to FIG. 2, the modulator 140a includes Mach-Zehnder modulators 142a_1 and 142a_2 and a phase converter 144a.

The Mach-Zehnder modulator 142a_1 receives an optical carrier and an I signal, and maps and outputs bit information of the I signal to a phase 0 or 180° of the optical carrier according to bit information of the input I signal.

The Mach-Zehnder modulator 142a_2 receives an optical carrier and a Q signal, and maps bit information of the input Q signal to a phase 0 or 180° of the optical carrier according to bit information of the input Q signal to output the bit information to the phase converter 144a.

The phase converter 144a converts a phase of the optical carrier to which the bit information of the Q signal is mapped by 90°. Thereby, the bit information of the Q signal is mapped to a phase 90° or 270° of the optical carrier.

Therefore, an I or Q signal is mapped to a corresponding phase of phases 0, 90°, 180°, and 270° of the optical carrier.

Referring again to FIG. 1, the signal coupler 150 combines optical signals that are optically modulated by the modulators 140a and 140b to transmit the optical signals to the optical receiving apparatus 200. The signal coupler 150 can be formed by an optical filter, an optical coupler or a polarization controller, and an optical coupler.

The optical receiving apparatus 200 includes a signal divider 210, interferometers 220a and 220b, balanced photo-detectors (BPD) 230a_1, 230a_2, 220b_1, and 220b_2, amplifiers 240a_1, 240a_2, 240b_1, and 240b_2, and a parallelizing device 250.

The signal divider 210 receives an optical signal from the optical transmitting apparatus 100, separates the received optical signal into two optical signals having two wavelengths A -δ λ and λ +δ λ , and outputs the separated optical signal to the interferometers 220a and 220b.

The interferometers 220a and 220b convert the phase modulated optical signal to intensity modulated optical signal. In this way, demodulation technology using the interferometer delays one side path of the interferometer by a symbol period, and thus allows front and back bits to cause interference, thereby outputting a signal of 1 or 0 according to a phase difference of the front and back bits.

The interferometers 220a and 220b according to an exemplary embodiment of the present invention use the Mach-Zehnder delay interferometer.

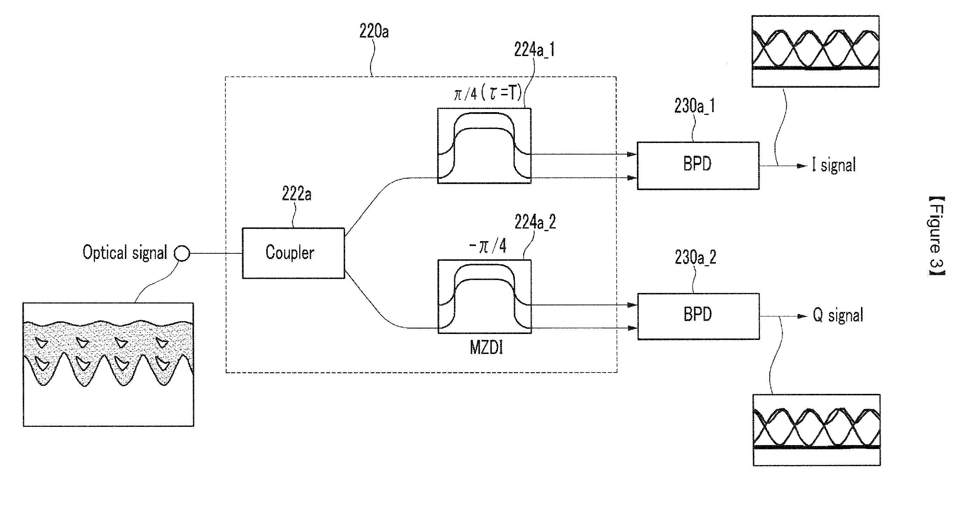

FIG. 3 is a diagram illustrating an example of an interferometer that is shown in FIG. 1. FIG. 3 illustrates only the interferometer 220a of the interferometers 220a and 220b that are allocated on an optical carrier basis, and two interferometers 220a and 220b can be formed with the same method.

Referring to FIG. 3, the interferometer 220a includes a coupler 222a and Mach-Zehnder delay interferometers (MZDI) 224a_1 and 224a_2.

The coupler 222a divides the input optical signal into two signals to output the two signals to the MZDIs 224a_1 and 224a_2.

The MZDI 224a_1 has two output terminals, divides a signal that is input from the coupler 222a into two components, delays one side path by a symbol period T of a signal, and couples the two components. Therefore, constructive and destructive interference occurs at two output terminals of the MZDI 224a_1, respectively.

Similarly, the MZDI 224a_2 has two output terminals, divides another signal that is input from the coupler 222a into two signal components, delays one side path by a symbol period T of a signal, and couples the two signal components. Therefore, constructive and destructive interference occurs at two output terminals, respectively of the MZDI 224a_2. In this case, in two MZDIs 224a_1 and 224a_2, a phase difference between signals is adjusted to be +45° and -45° together with time delay. Thereby, an I signal component and a Q signal component that are transmitted from the optical transmitting apparatus 100 can be restored, and in the MZDI 224a_1 and 224a_2, a signal in which a phase is modulated is converted to a signal in which a intensity is modulated.

Referring again to FIG. 1, the BPDs 230a_1, 230a_2, 230b_1, and 230b_2 output two pairs of I and Q signals in which two pairs of an I signal component and a Q signal component that are demodulated with intensity modulation by the interferometers 220a and 220b are converted to an electric signal to the amplifiers 240a_1, 240a_2, 240b_1, and 240b_2, respectively.

The amplifiers 240a_1, 240a_2, 240b_1, and 240b_2 amplify output signals of corresponding BPDs 230a_1, 230a_2, 230b_1, and 230b_2 to output the output signals to the parallelizing device 250.

The parallelizing device 250 separates two pairs of I and Q signals that are output from the amplifiers 24a_1, 240a_2, and 240b_1, 240b_2 into the n-quantity of output signals.

The control circuit 300 controls bias of using optoelectronic devices and monitors a state of the optical transceiver. Further, the control circuit 300 controls a phase of the modulators 140a and 140b and the interferometers 220a and 220b.

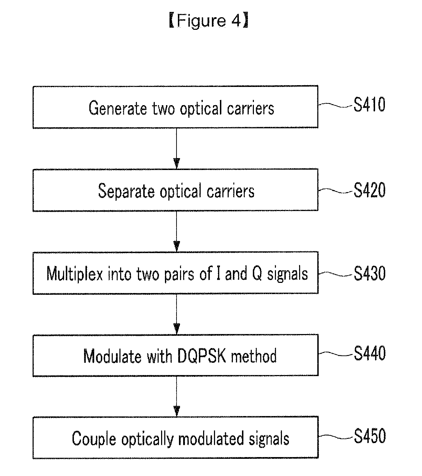

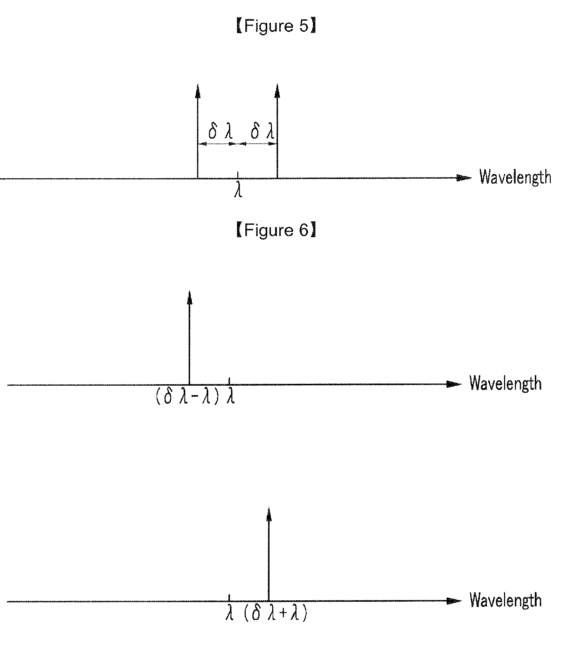

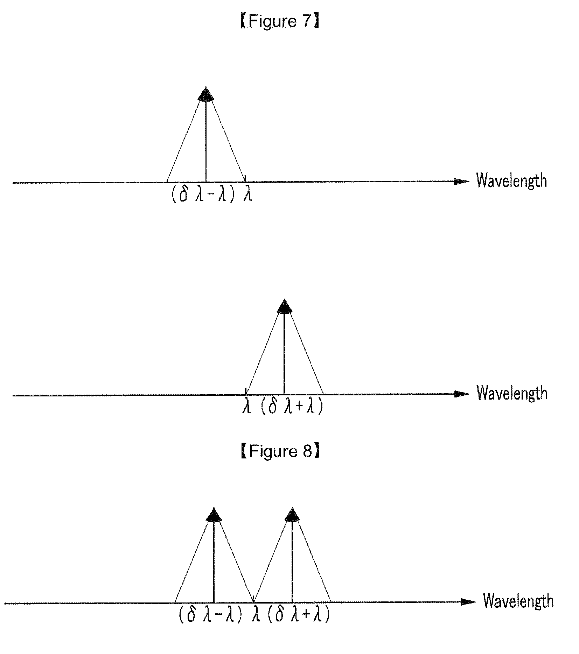

FIG. 4 is a flowchart illustrating a method of transmitting light using an optical transmitting apparatus according to an exemplary embodiment of the present invention. FIG. 5 is a diagram illustrating the output of a dual carrier generator, and FIG. 6 is a diagram illustrating an optical carrier that is separated by a carrier separator. Further, FIG. 7 is a diagram illustrating the output of two modulators, and FIG. 8 is a diagram illustrating the output of a signal coupler.

Referring to FIG. 4, the dual carrier generator 120 generates two optical carriers having wavelengths λ -δ A and A +δ A that are separated by a predetermined wavelength 5 λ from a central wavelength λ (S410), as shown in FIG. 5. In this case, two optical carriers may be generated while separated by the same gap from the central wavelength λ and may be generated while separated by different gaps.

The carrier separator 130 separates two optical carriers having wavelengths λ -δ λ and λ +δ λ and outputs the two optical carriers to the modulators 140a and 140b (S420), as shown in FIG. 6.

Further, the serializing device 110 multiplexes the input n-quantity of electric signals into two pairs of I and Q signals Iₜ₁/Qₜ₁ and Iₜ₂/Qₜ₂, outputs a pair of I and Q signals Iₜ₁/Qₜ₁ to the modulator 140a, and outputs another pair of I and Q signals Iₜ₂/Qₜ₂ to the modulator 140b (S430).

The modulators 140a and 140b optically modulate the input I and Q signals Iₜ₁/Qₜ₁ and Iₜ₂/Qₜ₂ with a DQPSK method, and outputs the input I and Q signals to the signal coupler 150 (S440). In this case, a signal that is optically modulated with a DQPSK method by the modulators 140a and 140b can be represented, as shown in FIG. 7.

Thereafter, the signal coupler 150 combines optically modulated signals from the modulators 140a and 140b to transmit the signals to the optical receiving apparatus 200 (S450). In this case, a coupled signal of signals that are optically modulated with a DQPSK method by the modulators 140a and 140b can be represented, as shown in FIG. 8.

In this way, an optical signal that is optically modulated in the optical transmitting apparatus 100 is demodulated into an original signal via a signal divider 210, interferometers 220a and 220b, balanced photo-detectors (BPD) 230a_1, 230a_2, 220b_1, and 220b_2, amplifiers 240a_1, 240a_2, 240b_1, and 240b_2, and a parallelizing device 250 of the optical receiving apparatus 200.

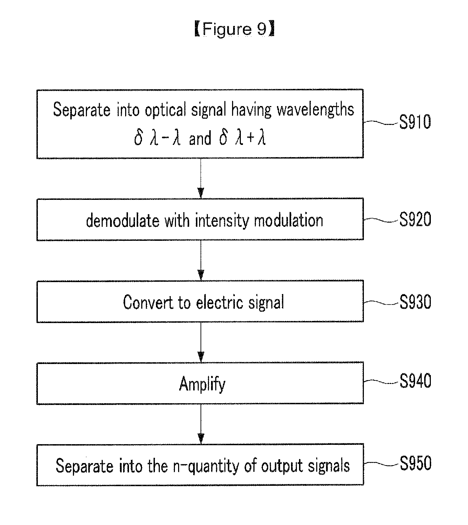

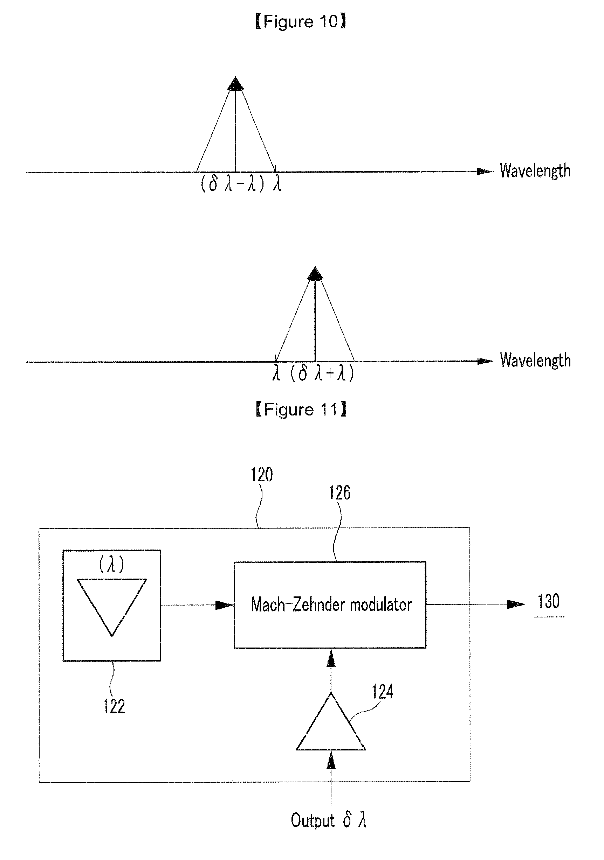

FIG. 9 is a flowchart illustrating a method of receiving light according to an exemplary embodiment of the present invention, and FIG. 10 is a diagram illustrating the output of a signal separator.

Referring to FIG. 9, the signal divider 210 separates an optical signal that is received from the optical transmitting apparatus 100 into an optical signal having wavelengths λ -δ λ and λ +δ A , outputs an optical signal having the wavelength λ - δλ to the interferometer 220a, and outputs an optical signal having the wavelength A +δ λ to the interferometer 220b (S910), as shown in FIG. 10.

The interferometers 220a and 220b each demodulate the input optical signals with intensity modulation to output the optical signals to the BPDs 230a_1, 230a_2, 220b_1, and 220b_2 (S920).

The BPDs 230a_1, 230a_2, 230b_1, and 230b_2 convert a signal that is demodulated with intensity modulation to an electric signal (S930). In this case, a pair of I and Q signals Iₜ₁/Qₜ₁ are restored by the BPDs 230a_1 and 230a_2, and another pair of I and Q signals Iₜ₂/Qₜ₂ are restored by the BPDs 230b_1 and 230b_2.

The amplifiers 240a_1, 240a_2, 240b_1, and 240b_2 amplify signals Iₜ₁/Qₜ₁ and Iₜ₂/Qₜ₂ that are output from the BPDs 230a_1, 230a_2, 220b_1, and 220b_2 to output the signals Iₜ₁/Qₜ₁ and Iₜ₂/Qₜ₂ to the parallelizing device 250 (S940).

The parallelizing device 250 separates two pairs of I and Q signals Iₜ₁/Qₜ₁ and Iₜ₂/Qₜ₂ that are output from the amplifiers 240a_1, 240a_2, 240b_1, and 240b_2 into the n-quantity of output signals (S950).

FIG. 11 is a diagram illustrating an example of a dual carrier generator that is shown in FIG. 1.

Referring to FIG. 11, the dual carrier generator 120 includes a laser 122, a clock driver 124, and a Mach-Zehnder modulator 126.

The laser 122 outputs a signal having a central wavelength λ to output the signal to the Mach-Zehnder modulator 126.

The clock driver 124 outputs an electrical clock signal having a pulse period of a wavelength δλ to the Mach-Zehnder modulator 126.

The Mach-Zehnder modulator 126 receives a signal having a central wavelength λ and an electrical clock signal having a gap of a wavelength δ λ and generates two electric signals, i.e., two optical carriers having wavelengths λ -δ λ and λ +δ λ that are separated by a wavelength δ λ from a central wavelength λ .

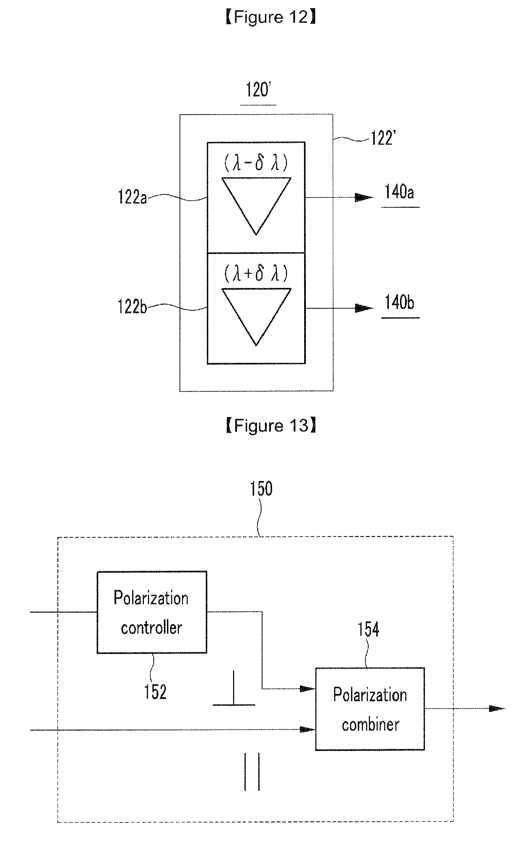

FIG. 12 is a diagram illustrating another example of a dual carrier generator that is shown in FIG. 1.

Referring to FIG. 12, a dual carrier generator 120' includes a double laser source 122'. The double laser source 122' includes two lasers 122a and 122b, and each of the lasers 122a and 122b outputs a signal having wavelengths λ -δ λ and λ +δ λ. Because the dual carrier generator 120' generates a signal having wavelengths λ -δ λ and λ +δ λ from each of the lasers 122a and 122b, it is unnecessary to separate a signal in the carrier separator 130. Therefore, the lasers 122a and 122b directly output a signal having wavelengths λ -δ λ and λ +δ λ to the modulators 140a and 140b.

When output signals of the two lasers 122a and 122b are coupled again using a coupler, the signals can be separated again through the carrier separator 130 and output to the modulators 140a and 140b.

FIG. 13 is a diagram illustrating an example of a signal coupler that is shown in FIG. 1.

Referring to FIG. 13, the signal coupler 150 includes a polarization controller 152 and a polarization combiner 154.

The polarization controller 152 adjusts polarization of one of optically modulated optical signals from the modulators 140a and 140b, and outputs the optical signal to the polarization combiner 154. In this case, the polarization controller 152 can adjust polarization of one of optically modulated optical signals from the modulators 140a and 140b such that polarization of two optically modulated optical signals from the modulators 140a and 140b is orthogonal.

The polarization combiner 154 couples another one of optical signals that are optically modulated from the modulators 140a and 140b and an optical signal in which polarization is adjusted from the polarization controller 152. When polarization of an optical signal is input to a predetermined polarizing axis, the polarization combiner 154 couples the optical signals.

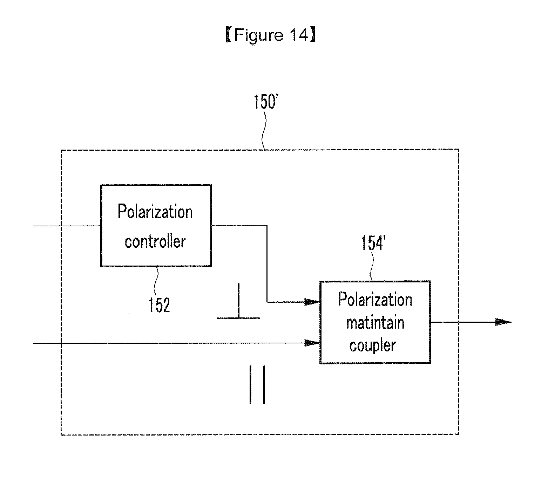

FIG. 14 is a diagram illustrating another example of a signal coupler that is shown in FIG. 1.

Referring to FIG. 14, a signal coupler 150' includes a polarization controller 152 and a polarization maintaining coupler 154'. That is, while sustaining polarization using the polarization maintaining coupler 154' instead of the polarization combiner 154 that is shown in FIG. 13, another one of optically modulated optical signals from the modulators 140a and 140b and an optical signal in which polarization is adjusted from the polarization controller 152 can be coupled. According to another exemplary embodiment of the present invention, two optical carriers may be directly connected to the outside of an optical transceiver without using the signal coupler 150 and the signal separator 210.

Therefore, the optical transceiver according to an exemplary embodiment of the present invention can transmit a signal with a high transmission speed and a low symbol rate speed without using an ADC or a DSP.

An exemplary embodiment of the present invention may not only be embodied through the above-described apparatus and method, but may also be embodied through a program that realizes a function corresponding to a configuration of the exemplary embodiment of the present invention or a recording medium on which the program is recorded, and can be easily embodied by a person of ordinary skill in the art from the description of the foregoing exemplary embodiment.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An optical transmitting apparatus, comprising:
a dual carrier generator that generates first and second optical carriers;
a serializing device that multiplexes a plurality of input signals into two pairs of in-phase (I) and quadrature-phase (Q) signals;
a first modulator that modulates and outputs a pair of I and Q signals using a phase of the first optical carrier; and
a second modulator that modulates and outputs another pair of I and Q signals using a phase of the second optical carrier.

2. The optical transmitting apparatus of claim 1, wherein the first and second modulators use a differential quadrature phase shift keying (DQPSK) modulation method.

3. The optical transmitting apparatus of claim 1, wherein the dual carrier generator comprises:
a laser that generates a signal of a central wavelength;
a clock driver that generates an electrical clock signal; and
a Mach-Zehnder modulator that generates the first and second optical carriers by separating by a pulse period of the clock signal from the central wavelength.

4. The optical transmitting apparatus of claim 3, further comprising a carrier separator that separates the first and second optical carriers to output the first and second optical carriers to the first and second modulators.

5. The optical transmitting apparatus of claim 1, wherein the dual carrier generator comprises first and second lasers that generate the first and second optical carriers having each wavelength.

6. The optical transmitting apparatus of claim 1, further comprising a signal coupler that couple signals that are modulated by the first and second modulators to transmit the coupled signal to an optical receiving apparatus.

7. The optical transmitting apparatus of claim 6, wherein the signal coupler comprises:
a polarization controller that adjusts polarization of one of signals that are optically modulated by the first and second modulators; and
a polarization combiner that combines a signal in which polarizing is adjusted and another signal of signals that are modulated by the first and second modulators.

8. The optical transmitting apparatus of claim 6, wherein the signal coupler comprises:
a polarization controller that adjusts polarization of one of signals that are optically modulated by the first and second modulators; and
a polarization maintaining coupler that couples a signal in which polarizing is adjusted and another signal of signals that are modulated by the first and second modulators.

9. An optical receiving apparatus, comprising:
a first interferometer that restores an input optical signal into a pair of I and Q signal components by demodulating with intensity modulation;
a second interferometer that restores an input optical signal into another pair of I and Q signal components by demodulating with intensity modulation;
first and second balanced photo-detectors that output a pair of I and Q signals by converting the pair of I and Q signal components to an electric signal;
third and fourth balanced photo-detectors that output another pair of I and Q signals by converting another pair of I and Q signal components to an electric signal; and
a parallelizing device that separates the two pairs of I and Q signals into a plurality of signals by demultiplexing.

10. The optical receiving apparatus of claim 9, wherein the first and second interferometers each comprise:
a coupler that separates the input optical signal into two signals;
a first Mach-Zehnder delay interferometer that divides one of two signals into two signal components and that delays a signal component of one side path and couples the delayed signal component and another signal component of two signal components to output the I signal component; and
a second Mach-Zehnder delay interferometer that divides another one of two signals into two signal components and that delays a signal component of one side path and couples the delayed signal component and another signal component of two signal components to output the Q signal component,
wherein the first and second interferometers each generate the input optical signal at ±45°.

11. The optical receiving apparatus of claim 10, wherein the first and second Mach-Zehnder delay interferometers delay the signal component of one side path by a symbol period.

12. The optical receiving apparatus of claim 9, further comprising first to fourth amplifiers that amplify signals that are output from the first to fourth balanced photo-detectors, respectively.

13. The optical receiving apparatus of claim 9, further comprising a signal divider that separates the input optical signal into two optical signals having different wavelengths to output the optical signals to the first and second interferometers.

14. A method of transmitting an optical signal in an optical transmitting apparatus, the method comprising:
generating first and second optical carriers;
multiplexing a plurality of input signals into two pairs of I and Q signals;
optically modulating the two pairs of I and Q signals using a phase of the first and second optical carriers; and
transmitting the two modulated optical signals.

15. The method of claim 14, wherein the optically modulating of two pairs of I and Q signals comprises modulating the two pairs of I and Q signals with the differential quadrature phase shift keying (DQPSK) method.

16. The method of claim 14, wherein the generating of first and second optical carriers comprises:
generating a signal having a central wavelength;
generating an electrical clock signal; and
generating the first and second optical carriers by separating by a pulse period of the clock signal from the central wavelength.

17. The method of claim 14, wherein the transmitting of the modulated two optical signals comprises coupling the two optical signals.

18. A method of receiving an optical signal in an optical receiving apparatus, the method comprising:
converting the optical signal to I and Q signals using a phase difference of two optical signals having different wavelengths; and
separating two pairs of I and Q signals into a plurality of signals.

19. The method of claim 18, wherein the converting of the optical signal to I and Q signals comprises:
delaying a phase of one of the two optical signals;
dividing one optical signal having a delayed phase into two first signal components;
delaying a signal of one side path of the two first signal components and coupling two signal components;
delaying a phase of another one of the two optical signals;
dividing another one optical signal having a delayed phase into two second signal components; and
delaying a signal of one side path of the two second signal components and coupling two signal components.

20. The method of claim 19, wherein the delaying of a phase of one of the two optical signals and the delaying of a phase of another one of the two optical signals comprise delaying a phase by +45° and -45°.
